(19) Europäisches Patentamt
European Patent Office
Office européen des brevets

(11) Publication number: **0 203 351 B1**

(12) # EUROPEAN PATENT SPECIFICATION

(45) Date of publication of patent specification: 22.08.90

(51) Int. Cl.$^5$: G 01 N 27/417

(21) Application number: 86105424.5

(22) Date of filing: 18.04.86

(54) **Oxygen sensor element and process for producing the same.**

(30) Priority: 19.04.85 JP 82388/85
30.08.85 JP 189752/85

(43) Date of publication of application:
03.12.86 Bulletin 86/49

(45) Publication of the grant of the patent:
22.08.90 Bulletin 90/34

(84) Designated Contracting States:
DE FR GB

(56) References cited:
EP-A-0 133 820
EP-A-0 134 709
EP-A-0 148 622
EP-A-0 162 603
DE-A-2 907 032
US-A-4 507 191

(73) Proprietor: HITACHI, LTD.
6, Kanda Surugadai 4-chome
Chiyoda-ku, Tokyo 100 (JP)

(72) Inventor: Iwamura, Ryoji
3320-4, Nakadacho
Totsuka-ku Yokohama (JP)
Inventor: Murooka, Hideyasu
1809-11, Kamikuratacho
Totsuka-ku Yokohama (JP)
Inventor: Fujita, Tsuyoshi
Higashitotsuka Haitsu 303 201, Akibacho
Totsuka-ku Yokohama (JP)
Inventor: Ueno, Sadayasu
847-33, Ichige
Katsuta-shi (JP)
Inventor: Iwanaga, Shoichi
303-108, Karibacho
Hodogaya-ku Yokohama (JP)
Inventor: Suzuki, Seiko
3705, Kanaicho
Hitachiota-shi (JP)

(74) Representative: Altenburg, Udo, Dipl.-Phys.
et al
Patent- und Rechtsanwälte Bardehle-
Pagenberg-Dost-Altenburg-Frohwitter & Partner
Postfach 86 06 20
D-8000 München 86 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 203 351 B1

## Description

Background of the invention

This invention relates to an oxygen sensor element, particularly an oxygen sensor element having a built-in heater, and a process for producing the same.

Oxygen sensor elements practically used are constructed so as to expose one of porous electrodes sandwiching solid electrolyte plates to a gas to be measured (a partial pressure of oxygen being Pg) and to expose another porous electrode to a standard gas (a partial pressure of oxygen being Pr), and detect a signal voltage Vs which is represented by the Nernst's equation as follows:

$$Vs \propto \ln \frac{Pg}{Pr}$$

so as to measure an oxygen concentration in the gas to be measured.

In order to take out the signal voltage Vs, oxygen ions should flow through the solid electrolyte plates. When solid electrolyte plates made of $ZrO_2$ partially stabilized with $Y_2O_3$ are used, the signal voltage mentioned above cannot be obtained until the temperature of the oxygen sensor element becomes about 500°C or higher.

For example, the combustion control of cars is conducted by measuring the oxygen concentration in an exhaust gas which is a gas to be measured, and adjusting the ratio of air to fuel so as to carry out ideal combustion. In order to reduce a fuel cost of cars remarkably, it is necessary to operate such a controlling system from the start of the engine. Therefore, it is necessary to heat the oxygen sensor element with a heater until the temperature of the oxygen sensor element becomes 500°C or higher by heating with the exhaust gas. Further, in order to control with high precision, it is necessary to maintain the oxygen sensor element at a constant temperature by heating with the heater even after heating with the exhaust gas.

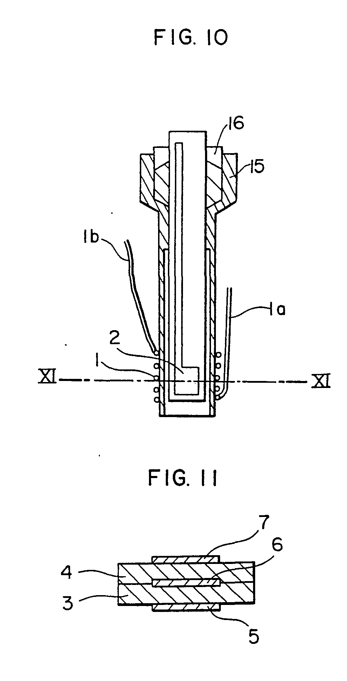

Problems of conventional oxygen sensor elements are explained referring to Figs. 10 and 11.

Fig. 10 is a schematic cross-sectional view showing an indirectly heating and solid electrolyte type oxygen sensor of prior art. Fig. 11 is a schematic cross-sectional view along the line XI—XI of Fig. 10. Such a solid electrolyte type oxygen sensor is disclosed in, for example, Japanese Patent Unexamined Publication Nos. 72286/77 and 130649/81.

In Fig. 10, numeral 2 denotes an oxygen sensor element having porous electrodes at the bottom portion of a solid electrolyte type oxygen sensor, and numeral 1 denotes a heater winding around the bottom portion of the oxygen sensor element 2 with a nichrome wire, platinum wire, or the like. The heater 1 is connected to electric wires 1a and 1b for supplying electric power. Numeral 15 denotes a holder for the oxygen sensor element, and numeral 16 denotes a fixing means for holding the oxygen sensor element 2 and attached to the holder 15. The oxygen sensor element 2 comprises a first solid electrolyte plate 3 and a second solid electrolyte plate 4 (made of, for example, $ZrO_2$ partially stabilized by 6 mole % of $Y_2O_3$) and porous electrodes 5, 6 and 7 (formed by, for example, screen printing a platinum paste) formed on the solid electrolyte plates as shown in Fig. 11. To the porous electrodes 5, 6 and 7, signal voltage lead-out wires 5a, 6a and 7a (not shown in the drawing) are connected.

In the solid electrolyte type oxygen sensor thus constructed, the porous electrode 7 is exposed to a gas to be measured, and the oxygen in pores of the porous electrode 6 is taken as a standard gas (the amount of oxygen corresponding to the oxygen flowed from the porous electrode 6 to the porous electrode 7 being supplied from the porous electrode 5 to the porous electrode 6). The signal voltage represented by the Nernst's equation as mentioned above is detected and taken out by the signal voltage lead-out wires 5a, 6a, 7a to measure the oxygen concentration in the gas to be measured.

Since the prior art solid electrolyte type oxygen sensor is an indirectly heating type wherein the oxygen sensor element 2 is heated from the outside by the heater 1 would therearound in a coil state, there is a problem in that the heating rate is slow. Further since the heat is not conducted effectively to the oxygen sensor element 2, there is also a problem in that the consumed electric power of the heater 1 is large. In addition, there is a further problem to be improved in that since the distance between the heater 1 and the oxygen sensor element 2 is large, the temperature of the oxygen sensor element 2 changes even if constant electric power is supplied to the heater 1, which results in making it impossible to control the temperature of the oxygen sensor element 2 highly precisely and thus producing errors in measured oxygen concentration values.

On the other hand, in order to form a heater in adhesion to the oxygen sensor element, it is necessary to insulate the heater with a material excellent in insulating properties at high temperatures. But since such a material hardly reacts with the solid electrolyte plate, contact of the heater with the oxygen sensor element is very difficult.

In DE—A—2907032 a solid electorlyte type oxygen sensor is disclosed comprising a central solid electrolyte plate containing $ZrO_2$ positioned between porous electrodes. Heating elements are placed between the porous electrodes and outer insulating layers containing $Al_2O_3$. One of the insulating layers is provided with through holes in order that the porous electrolyte thereunder can be exposed to the gas to be measured.

In EP—A—0134709 an oxygen sensor element is disclosed in which there are a plurality of solid electrolyte plates and porous electrodes. Also disclosed is an outer gas tight layer having a bore hole therethrough leading into a cavity in a further gas tight layer between the outer gas tight

layer and a measuring electrode to be exposed to the gas to be measured. The aperture defines a chamber over said measuring electrode.

Summary of the invention

It is an object of this invention to provide an oxygen sensor element overcoming the problems of the prior art, being low in consuming electric power of heater for heating an oxygen sensor element and excellent in temperature control of the oxygen sensor element. It is another object of this invention to provide a process for producing such an oxygen sensor element.

The oxygen sensor element of the present invention is defined in the accompanying Claim 1. It comprises porous electrodes and solid electrolyte plates containing $ZrO_2$ as a major component placed alternately. There is a solid electrolyte plate between each adjacent pair of porous electrodes and there is an insulating layer to that side of one porous electrode that is exposed to the gas to be measured. Between said insulating layer and the solid electrolyte plate on which said one porous electrode is positioned is an intermediate layer. The insulating layer has a built-in heater and a gas introducing hole leading to a gas chamber extending over said one porous electrode. The insulating layer contains $Al_2O_3$ as a major component. The intermediate layer is made of a metal oxide mixture which reacts with the insulating layer on its one side and the solid electrolyte plate on its other side at the time of sintering and has a thermal expansion coefficient value between that of the electrolyte plate and that of the insulating layer.

The process of the present invention is defined in the accompanying Claim 5. It comprises constructing a green sheet laminate by placing porous electrodes and solid electrolyte plates alternately, said solid electrolyte plates containing $ZrO_2$ as a major component and forming the electrode thereon,

placing a green sheet of intermediate layer made of a metal oxide mixture which reacts with the solid electrolyte plate and an insulating layer at the time of sintering and has a thermal expansion coefficient value between that of the solid electrolyte plate and that of the insulating layer, on an electrode formed side of solid electrolyte plate so as to form a gas chamber over the electrode,

placing a green sheet of insulating layer including a heater therein, containing $Al_2O_3$ as a major component and having a gas introducing hole on the intermediate layer,

pressing the green solid electrolyte plates, the green intermediate layer, and the green insulating layer, and

sintering the resulting pressed product.

Brief description of the drawings

Fig. 1 is a schematic cross-sectional view of one example of oxygen sensor element having a built-in heater.

Fig. 2 is a schematic cross-sectional view of essential portions of Fig. 1.

Fig. 3 is a flow chart showing a process for producing an oxygen sensor element.

Fig. 4 is a graph showing heating properties of an oxygen sensor element.

Fig. 5 is a schematic cross-sectional view of one example of oxygen sensor element having a built-in heater according to this invention.

Fig. 6 is a graph showing heating properties of an oxygen sensor element according to this invention.

Fig. 7 is a graph showing a relationship between the thermal expansion coefficient and the $Al_2O_3$ adding amount in the intermediate layer shown in Fig. 5.

Fig. 8 is a flow chart showing a process for producing an oxygen sensor element according to this invention.

Fig. 9 is a triangular diagram of the oxide binder system of

$$Al_2O_3—SiO_2—MgO.$$

Fig. 10 is a schematic cross-sectional view of an indirectly heating type oxygen sensor of prior art.

Fig. 11 is a cross-sectional view along the line XI—XI of Fig. 10.

Description of the preferred embodiments

This invention is based on an idea that effective heating of an oxygen sensor element can be attained by adhering a heater for heating the element directly to the element or by a built-in heater.

Oxygen sensor elements formed by a ceramic green sheet method have a structure, for example as shown in Fig. 11, comprising solid electrolyte plates 3 and 4 having oxygen ion conductivity and porous electrodes 5, 6 and 7 formed on the solid electrolytes. The operational function of the element can be obtained by comparing the oxygen amount in the pores in the porous electrode 6 taken as a standard oxygen chamber and the oxygen amount in a gas to be measured at the electrode 7. In such a case, the oxygen consumed between the electrodes 6 and 7, that is, the oxygen amount corresponding to the oxygen flowed from the electrode 6 to the electrode 7, is supplemented by flowing oxygen from the electrode 5 to the electrode 6. In order to heat the oxygen sensor element directly, a heater for heating the element directly is provided on an insulating layer 8 which is laminated on one side of the solid electrolyte plate 4 having the electrode 7 thereon as shown in Fig. 2. In Fig. 2, numeral 9 denotes a gas introducing hole and numeral 10 denotes a gas chamber for a gas to be measured.

The insulating layer 8 having a built-in heater 1 should have excellent adhesiveness to the oxygen sensor element after sintering. $Al_2O_3$ is in general a material having excellent insulating properties at high temperatures. But, it hardly reacts with $ZrO_2$ mainly constituting the solid electrolyte and is not solid soluble with $ZrO_2$. In order to solve such a problem, the present invention includes a process for producing a solid electrolyte type of oxygen

sensor element comprising constructing a green sheet laminate by placing, see Fig. 1, porous electrodes 5, 6 and 7 and solid electrolyte plates 3 and 4 alternately, said solid electrolyte plates 3 and 4 containing $ZrO_2$ as a major component. The electrodes 5, 6 and 7 are formed on the electrolyte plates 3 and 4. A green sheet of an intermediate layer 8, made of a metal oxide mixture which reacts with the solid electrolyte plate 4 and an insulating layer 11 at the time of sintering and has a thermal expansion coefficient value between that of the solid electrolyte plate 4 and that of the insulating layer 11, is placed over the electrode 7 formed on the solid electrolyte plate 4 so that the insulating layer 11 forms a gas chamber 10 over the electrode 7. A green sheet of said insulating layer 11 containing $Al_2O_3$ as a major component, said insulating layer 11 having a heater 1 therein and having a gas introducing hole 9 leading to the gas chamber 10, is placed on the intermediate layer. A pressing operation is then carried out on the green solid electrolyte plates 3, 4; the green intermediate layer 8 and the green insulating layer 11. The resulting pressed product is then sintered. The invention also resides in a solid electrolyte type oxygen sensor as defined in the accompanying Claim 1.

Examples of such metal oxide mixture are preferably oxide binders of

$$Al_2O_3—SiO_2—MgO$$

system and $Al_2O_3—SiO_2$ system. Among the

$$Al_2O_3—SiO_2—MgO$$

system oxide binders, those falling in the region encircled by curves

$$A—B—C—D—E—A$$

in the triangular diagram of Fig. 9 and having a melting point of 1500°C or lower are more preferable. In Fig. 9, individual points A, B, C, D and E have the following values in percents by weight:

| | $Al_2O_3$ | $SiO_2$ | MgO |
|---|---|---|---|
| A | 14.5 | 82.0 | 3.5 |
| B | 5.0 | 65.0 | 30.0 |
| C | 8.3 | 58.7 | 33.0 |
| D | 22.7 | 46.5 | 30.8 |
| E | 37.6 | 45.6 | 16.8 |

Among the $Al_2O_3—SiO_2$ system oxide binders, those containing $Al_2O_3$ in an amount of 5 to 30% by weight and $SiO_2$ in an amount of 70 to 95% by weight are more preferable.

The solid electrolyte type oxygen sensor element having a built-in heater and applying oxygen ion conductivity having a structure, for example, as shown in Fig. 1 can be produced as follows.

A green oxygen sensor element is prepared by forming electrodes 5, 6 and 7 on green sheets of solid electrode plates 3 and 4 containing $ZrO_2$ as a major component. A green sheet of an insulating layer 8 provided a heater 1 thereon and made of an insulator containing $Al_2O_3$ as a major component is placed on the solid electrolyte plate 4 having the electrode 7 thereon so as to form a gas chamber 10 to which a gas to be measured such as an exhaust gas is introduced through a gas introducing hole 9. On the other hand, an oxide binder such as an

$$Al_2O_3—SiO_2—MgO$$

system oxide binder or an $Al_2O_3—SiO_2$ system oxide binder which is solid soluble both in the solid electrolyte containing $ZrO_2$ as a major component and the insulating layer containing $Al_2O_3$ as a major component, is added to either the solid electrolyte plates 3 and 4 or the insulating layer 8. Alternatively, an insulating thin layer containing $Al_2O_3$ as a major component and the oxide binder as a minor component is formed at an interface of the solid electrolyte plate 4 and the insulating layer 8. Then, the laminated green sheets of the solid electrolyte plates 3 and 4 and the insulating layer 8 are pressed, followed by sintering.

More concretely, a process for producing the oxygen sensor element having a built-in heater as shown in Fig. 1 can be carried out as shown in Fig. 3.

First, a $ZrO_2$ powder partially stabilized with $Y_2O_3$ is mixed with a conventional organic binder such as polyvinyl butyral, a conventional plasticizer such as butyl phthate, butyl glycolate, and a conventional organic solvent such as trichloroethane, tetrachloroethylene, n-butanol, etc., to give a slurry, which is formed into a ceramic plate (a green sheet of 0.25 mm thick) by slip casting according to a doctor blade method. Then, the green sheet is cut to give solid electrolyte plates 3 and 4 having predetermined size and shape, e.g. 13 mm wide and 40 mm long. Using a platinum paste obtained by making a platinum powder a paste state with an organic material such as ethylcellulose and n-butyl carbitol acetate (diethylene glycol monobutyl ether acetate), a first electrode 5 and a second electrode 6 are formed on the solid electrode plate 3 by a screen printing method. In the same manner, a third electrode 7 is formed on the solid electrode plate 4. Further, in order to form a gas chamber 10 on the electrode 7 after sintering, an organic layer 12 made from e.g. ethylcellulose, polyvinyl butyral, is formed as shown in Fig. 3. As the insulating layer 8, a green sheet of 0.15 mm thick is formed in the same manner as mentioned above from a mixture of 90 parts by weight of $Al_2O_3$ and 10 parts by weight of oxide binder containing 30% by weight of $Al_2O_3$, 53% by weight of $SiO_2$ and 17% by weight of MgO. The green sheet of insulator is cut with the same size and shape as the solid electrolyte plates mentioned above and drilled a gas introducing hole 9 for a gas to be measured such as exhaust gas. Then, a heater is formed by screen printing the same platinum

paste as mentioned above on the insulating layer 8. In order to protect the platinum heater, an insulating layer 11 having a gas introducing hole 9 is placed on the insulating layer 8. The green solid electrolyte plates 3 and 4 and the insulating layers 8 and 11 are laminated and hot pressed at 90°C under a pressure of 30 kgf/cm$^2$. followed by sintering at 1500°C for 2 hours in the air. After sintering, a reaction phase is admitted near the interface of $ZrO_2$ of the solid electrolyte plate 4 and $Al_2O_3$ of the insulating layer 8 to give strong bonding.

Fig. 4 shows the results of heating test of the oxygen sensor element using the heater mentioned above. As is clear from Fig. 4, an electric power necessary to heat the element to 800°C is about 7 W, which value is 1/10 or less of the value of 100 W in the case of the prior art indirectly heating type oxygen sensor.

In the above-mentioned embodiment, an oxide binder of

$$Al_2O_3—SiO_2—MgO$$

system having the composition within the region encircled by the curves

A—B—C—D—E—A

in the triangular diagram of Fig. 9 is used in order to melt at a temperature lower than the sintering temperature of the element (1500°C), to accelerate the sintering of $Al_2O_3$ and to match the sintering shrinkage with $ZrO_2$. It is also possible to match the sintering shrinkage by adjusting the particle distribution of $ZrO_2$ and $Al_2O_3$.

It is possible to use as the oxide binder a compound containing 5 to 30% by weight of $Al_2O_3$ and 70 to 95% by weight of $SiO_2$.

The oxide binder is mixed in an amount of preferably 5 to 15% by weight in the insulating layer, the remainder being alumina. If the amount of the oxide binder is more than 15% by weight, the amount of liquid phase generated at the time of sintering becomes too much to react undesirably with a sintering table placed in a sintering furnace, whereas if the amount is less than 5% by weight, the reaction phase with $ZrO_2$ cannot be obtained sufficiently to fail to obtain strong bonding.

As mentioned above, $Al_2O_3$ is an excellent material for producing the insulating layer 8 due to high insulating properties at high temperatures. But, the linear thermal expansion coefficient of $Al_2O_3$ is greatly different from that of $ZrO_2$. Therefore, when the insulating layer containing $Al_2O_3$ as a major component is directly adhered to the solid electrolyte plate containing $ZrO_2$ as a major component for lamination, there is a fear of destroying the oxygen sensor element due to a stress caused by the difference in thermal expansion coefficients of $Al_2O_3$ and $ZrO_2$ at the time of sintering or during the use at high temperatures. Further, since $ZrO_2$ and $Al_2O_3$ hardly react each other, it is difficult to make them into one body by sintering.

In order to solve such a problem, an intermediate layer having a value, preferably a middle value of linear thermal expansion coefficient between that of the solid electrolyte plate containing $ZrO_2$ as a major component and that of the insulating layer containing $Al_2O_3$ as a major component, and having reactivity with both of $Al_2O_3$ and $ZrO_2$ at the time of sintering, is interposed between the insulating layer and the solid electrolyte plate. As the intermediate layer, one made of $ZrO_2$ partially stabilized with 6 mole % of $Y_2O_3$ and containing 3% by weight of $Al_2O_3$ is preferable.

A solid electrolyte type oxygen sensor element having a built-in heater containing the intermediate layer therein has a structure as shown below.

That is, the oxygen sensor element comprises a first and second solid electrolyte plates laminated and containing partially stabilized $ZrO_2$ as a major component, porous electrodes individually connected to lead-out wires for taking out signal voltages formed on one of the joined surfaces of the solid electrolyte plates and two opposite surfaces of the joined surfaces of the solid electrolyte plates, an intermediate layer made of a metal oxide mixture having a linear thermal expansion coefficient value, preferably a middle value, between that of the solid electrolyte plate and that of an insulating layer formed on one of the solid electrolyte plates so as to have a gas chamber for a gas to be measured over the electrode on the solid electrolyte plate and a gas introducing hole connected to the gas chamber, and an insulating layer containing $Al_2O_3$ as a major component and having a heater built in and a gas introducing hole connected to the gas introducing hole of the intermediate layer.

Such an oxygen sensor element can be operated by heating the solid electrolyte plates with the heater, passing a gas to be measured to the gas chamber through the gas introducing hole, and taking out signal voltages with regard to the oxygen concentration of the gas to be measured from the lead-out wires.

The oxygen sensor element including the intermediate layer can be produced as follows.

There are used a green sheet of the first solid electrolyte plate containing partially stabilized $ZrO_2$ as a major component and having two porous electrodes connected to lead-out wires for taking out the signal volages on both surfaces thereof, a green sheet of the second solid electrolyte plate containing partially stabilized $ZrO_2$ as a major component and having a porous electrode connected to a lead-out wire for taking out the signal voltage on one surface thereof, a pair of green sheets of the insulating layer containing $Al_2O_3$ as a major component, and having a gas introducing hole and a heater which is placed on one surface of joint surfaces of the green sheets, and a green sheet of the intermediate layer containing a metal oxide mixture which reacts with the solid electrolyte plate and the insulating layer at the time of sintering and has a value, preferably a middle value, of linear thermal expansion coefficient after sintering between that of the

solid electrolyte plate and that of the insulating layer, and having a gas introducing hole.

The two green sheets of solid electrolyte plates are laminated so as to place the porous electrodes and the green sheets alternately, the green sheet of intermediate layer is laminated on one surface of the solid electrolyte plates so as to form a gas chamber (using an organic material which is removed by sintering) over the electrode and to connect to the gas introducing hole, and the green sheets of insulating layer are laminated on the intermediate layer so as to connect the gas introducing holes each other, followed by pressing and sintering in the same manner as explained previously.

More concretely, the oxygen sensor element having the intermediate layer as shown in Fig. 5 can be produced as follows.

The oxygen sensor element 2A can be formed by laminating a first solid electrolyte plate 3 and a second solid electrolyte plate 4, each containing $ZrO_2$ partially stabilized with 6 mol % by $Y_2O_3$, having a porous electrode 6 connected to a lead-out wire 6a at the joint surfaces of the solid electrolyte plates 3 and 4 and two porous electrodes 5 and 7 connected to lead-out wires 5a and 7a at opposite surfaces to the joint surfaces, these lead-out wires being used for taking out signal voltages, these electrodes being formed by using a platinum paste by a screen printing method, by laminating insulating layers 8a and 8b [made of a mixture containing 90 parts by weight of $Al_2O_3$ and 10 parts by weights of $Al_2O_3$ (30 wt%)—$SiO_2$ (53 wt%)—MgO (17 wt%)] having gas introducing holes 9a and 9b connected each other to a gas chamber 10 and a heater 1A (formed by using the platinum paste by a screen printing method) via an intermediate layer 12 (made of $ZrO_2$ partially stabilized with 6 mole % of $Y_2O_3$ and containing 3% by weight of $Al_2O_3$) which is placed so as to form the gas chamber 10 over the electrode 7, and, if necessary, by forming a protective layer 14 (made of, for example, magnesium spinel) on the porous electrode 5.

The linear thermal expansion coefficient of the intermediate layer is $8.4\times10^{-6}$/°C in the temperature range of 20° to 800°C, said value being in the middle of the value of the first and second solid electrolyte plates 3 and 4 ($8.8\times10^{-6}$/°C in the above-mentioned temperature range) and the value of the insulating layers 8a and 8b ($8.0\times10^{-6}$/°C in the above-mentioned temperature range). Since the stress due to the difference in the thermal expansion is relaxed by interposing the intermediate layer 12 between the solid electrolyte plate 4 and the insulating layer 8b, the oxygen sensor element 2A is not destroyed at the time of sintering (mentioned below) or during the use wherein the oxygen sensor element 2A is heated to about 800°C by the heater 1A. Further since the intermediate layer 12 reacts with the both the solid electrolyte plate 4 and the insulating layer 8b, the adhesiveness of the intermediate layer 12 to the solid electrolyte plate 4 and the insulating layer 8b is good, which results in easily sintering individual green sheets into one body to give the oxygen sensor element 2A with excellent mechanical strength.

When the thus produced solid electrolyte type oxygen sensor element 2A is exposed to a gas to be measured and switched on, an electric current is passed through the heater 1A until the temperature of the gas to be measured is raised to the predetermined value of 800°C. Since the oxygen sensor element 2A can effectively be heated by the heater 1A, the oxygen concentration of the gas flowed to the gas chamber 10 from the gas introducing hole 9a can be measured easily with high precision irrespective of the temperature of the gas to be measured.

Effects of the oxygen sensor element 2A are explained referring to Fig. 6, which is a graph showing the heater heating properties of the solid electrolyte type oxygen sensor element shown in Fig. 5.

As is clear from Fig. 6, the consumed electric power necessary for heating the oxygen sensor element 2A to 800°C is about 10 W, which value is about 1/10 of the value of about 100 W in the case of the prior art indirectly heating type oxygen sensor shown in Fig. 10.

Further, since there is no gap between the heater 1A and the oxygen sensor element 2A and made into one body, the precision for temperature control of the oxygen sensor element 2A is improved to ±5°C from ±20°C. Therefore the precision of the oxygen concentration measurement is improved in about 4 times. Further, when the solid electrolyte type oxygen sensor element of this embodiment is used for combustion control of car engines, high precision control of combustion can be carried out from the start of the engine. Therefore, the fuel cost can be reduced in about 10% compared with the use of prior art indirectly heating type oxygen sensor.

In the above-mentioned embodiment, $ZrO_2$ partially stabilized with 6 mole % $Y_2O_3$ is used as the solid electrolyte plates 3 and 4 in the oxygen sensor element 2A, but the material for the solid electrolyte plates is not limited to such a composition. For example, there can be used $ZrO_2$ partially stabilized with 4 to 8 mole % of $Y_2O_3$ or 4 to 8 mole % of CaO.

Further, the material for the insulating layers 8a and 8b is not limited to the composition comprising 90 parts by weight of $Al_2O_3$ and 10 parts by weight of an oxide binder of $Al_2O_3$ (30 wt%)—$SiO_2$ (53 wt.%)—MgO (17 wt%). As the oxide binder, it is preferable to use oxides having the composition encircled by the curve

A—B—C—D—E—A

in the triangular diagram of Fig. 9 and oxides of $Al_2O_3$—$SiO_2$ system wherein $Al_2O_3$ is 5 to 30% by weight and $SiO_2$ is 70 to 95% by weight. It is also possible to use

$Al_2O_3—SiO_2—CaO$

system oxides. Further, $Al_2O_3$ single body can also be used, when the particle size is reduced. The sintering temperature of it is close to that of the solid electrolyte, and the sintering shrinkage is matched to that of the solid electrolyte plate.

The material for the intermediate layer 12 is not limited to $ZrO_2$ partially stabilized with 6 mole % $Y_2O_3$ and containing 3% by weight of $Al_2O_3$. The amount of $Al_2O_3$ to be added is limited as explained below referring to Fig. 7.

Fig. 7 is a graph showing a relationship between the thermal expansion coefficient and the adding amount of $Al_2O_3$ to the intermediate layer shown in Fig. 5. As is clear from Fig. 7, when the $Al_2O_3$ adding amount is less than 1.5% by weight, the linear thermal expansion coefficient becomes large and close to that of the solid electrolyte plate 4, which results in making the adhesiveness of the intermediate layer to the insulating layer 8b worse. On the other hand, when the $Al_2O_3$ adding amount is more than 4% by weight, the linear thermal expansion coefficient becomes small and close to that of the insulating layer 8b, which results in reducing the thermal stress relaxation effect even if the intermediate layer is interposed. Therefore, preferable adding amount of $Al_2O_3$ is 1.5 to 4% by weight.

Further, as the material for the intermediate layer, there can be used any metal oxides which react with the solid electrolyte plate 4 and the insulating layer 8b at the time of sintering, and have a linear thermal expansion coefficient value after sintering between that of the solid electrolyte plate and that of the insulating layer. For example, there can be used metal oxides of $Al_2O_3—SiO_2$ system, metal oxides of $Al_2O_3—TiO_2$ system.

In the above embodiment, the protective layer 14 is formed on the porous electrode 5, but the use of the protective layer is not essential. But the use of the protective layer is advantageous in that adhesion of dusts and peeling of the porous electrode 5 due to collisions of exhaust gas can be prevented, and thus the life of the porous electrode 5, in other words the life of the oxygen sensor element 2A can be prolonged.

One embodiment of the process for producing the solid electrolyte type oxygen sensor element 2A of Fig. 5 is explained below referring to Fig. 8.

Fig. 8 is a flow chart showing one embodiment of the process for producing an oxygen sensor element in a solid electrolyte type oxygen sensor according to this invention. In Fig. 8, the same reference numbers as used in Fig. 5 are used.

A $ZrO_2$ powder partially stabilized with 6 mole % $Y_2O_3$ is mixed with a conventional organic binder, a conventional plasticizer, a conventional organic solvent to give a slurry, which is formed into a plate-like green sheet (0.25 mm thick) by slip casting according to a doctor blade method. Then, the green sheet is cut to give a first solid electrolyte plate 3 having predetermined size. On both sides of the solid electrolyte plate 3, porous electrodes 5 and 6 connected to lead-out wires 5a and 6a for taking out signal voltages are formed by screen printing a platinum paste obtained by mixing a platinum powder with an organic material. A second solid electrolyte plate 4 is cut from the green sheet in the same manner with the same size as in the case of the first solid electrolyte plate 3. A porous electrode 7 connected to a lead-out wire 7a for taking out a signal voltage is formed on one surface of the solid electrolyte plate 4 in the same manner as in the case of forming the electrodes 5 and 6. On the porous electrode 7, an organic material 13 (which can burn at about 300°C and below the sintering temperature, e.g. ethylcellulose, polyvinyl butyral, etc.) as a core for forming a gas chamber 10 is formed by a screen printing method (or alternatively, a film-like material may be adhered).

A green sheet of 0.15 mm thick is formed in the same manner as mentioned above from a mixture of 90 parts by weight of $Al_2O_3$ and 10 parts by weight of an oxide binder of $Al_2O_3$ (30 wt%)—$SiO_2$ (53 wt%)—$MgO$ (17 wt.%). The green sheet is cut with the same size as the first and second solid electrolyte plates 3 and 4 to give an insulating layer 8b, which is drilled to have a gas introducing hole 9a. On the jointing surface 11b of the insulating layer 8b a heater 1A is formed by using a platinum paste obtained by mixing a platinum powder with an organic material and by using a screen printing method. An insulating layer 8a having a gas introducing hole 9a is formed in the same manner with the same size as in the case of the insulating layer 8b (but having no heater on the joining surface 11).

A green sheet of 0.25 mm thick is prepared in the same manner as mentioned above from a mixture of $ZrO_2$ powder partially stabilized with 6 mole % $Y_2O_3$ containing 3% by weight of $Al_2O_3$. The green sheet is cut in the same size as the green sheet of solid electrolyte plate 3 and a gas introducing hole 9b (the same place as the gas introducing holes 9a of the insulating layers 8a and 8b) is drilled to give an intermediate layer 12.

The five thus prepared green sheets are laminated so that the green sheets of the solid electrolyte plates 3 and 4 and the porous electrodes 5, 6 and 7 are placed alternately, and the green sheet of intermediate layer 12 is laminated on the porous electrode 7 so as to form the gas chamber 10 over the electrode 7, followed by lamination of the green sheets of insulating layers 8b and 8a in this order so as to face the joining surfaces 11b and 11a and to connect the gas introducing holes 9a and 9b.

The laminated product is hot pressed at 120°C under a pressure of 8 MPa (80 kgf/cm$^2$), followed by sintering at 1500°C for 2 hours in the air. The organic material layer 13 is burnt at about 300°C during the sintering. Then, magnesium spinel is flame sprayed on the porous electrode 5 exposed to the outside to form a protective layer 14. Thus, the objected oxygen sensor element 2A is produced.

According to above-mentioned embodiment,

since the first and second solid electrolyte plates 3 and 4 are laminated, and a pair of insulating layers 8a and 8b forming the heater 1A at the joining surface 11b are laminated thereon via the intermediate layer 12, followed by sintering, there are many advantages in that it is not necessary to attach the heater 1 from the outside as the prior art indirectly heating and solid electrolyte type oxygen sensor shown in Fig. 10, the production of solid electrolyte type oxygen sensors becomes easy, and there is no fear of breaking the wire of the heater 1 during the production process.

In the above-mentioned embodiment, the organic material layer 13 is formed on the porous electrode 7 on the green sheet of the second solid electrolyte plate 4. But the formation of the organic material layer 13 as the core is not always necessary. But the formation of the organic material layer 13 can completely prevent the deformation of the gas chamber 10 caused by the lamination of the intermediate layer 12, so that there is an advantage in that there can be obtained the largest effective area of the porous electrode 7 with which the gas to be measured flowed to the gas chamber 10 contacts during the operation of the oxygen sensor.

As mentioned above, according to this invention, there can easily be produced oxygen sensor elements having a built-in heater, which oxygen sensor elements save remarkably the consuming electric power for heating the heater and it becomes possible to control the temperature of the oxygen sensor element with high precision.

**Claims**

1. A solid electrolyte type oxygen sensor element comprising porous electrodes (5, 6, 7) and solid electrolyte plates (3, 4) containing $ZrO_2$ as a major component placed alternately; an insulating layer (8a, 8b) to that side of one porous electrode (7) that is exposed to the gas to be measured; an intermediate layer (12) between the insulating layer (8a; 8b) and the solid electrolyte plate (4) on which said one porous electrode (7) is positioned; said insulating layer (8a, 8b) having a built-in heater (1A) and a gas introducing hole (9a) leading to a gas chamber (10) extending over said one porous electrode (7); said insulating layer (8a, 8b) containing $Al_2O_3$ as a major component; the intermediate layer (12) being made of a metal oxide mixture which reacts with the insulating layer (8a, 8b) and the solid electrolyte plate (4) at the time of sintering; and the intermediate layer (12) having a thermal expansion coefficient value between that of the electrolyte plate (4) and that of the insulating layer (8a, 8b).

2. A solid electrolyte type oxygen sensor element according to Claim 1, wherein the metal oxide mixture is partially stabilized $ZrO_2$ and 1.5 to 4% by weight of $Al_2O_3$.

3. A solid electrolyte type oxygen sensor element according to Claim 1, which further comprises a protective layer formed on an electrode exposed to an outside atmosphere.

4. A solid electrolyte oxygen sensor element according to Claim 1, wherein the intermediate layer (12) is made of $ZrO_2$ partially stabilized with 6 mole % of $Y_2O_3$, said intermediate layer (12) being between an insulating layer having a built-in heater and made of alumina and a solid electrolyte layer made of $ZrO_2$ partially stabilized with 6 mole % of $Y_2O_3$.

5. A process for producing the solid electrolyte type oxygen sensor element defined in Claim 1 which comprises

constructing a green sheet laminate by placing porous electrodes and solid electrolyte plates alternately, said solid electrolyte plates containing $ZrO_2$ as a major component, and forming the electrodes on the electrolyte plates,

placing a green sheet of an intermediate layer made of a metal oxide mixture which reacts with the solid electrolyte plate and an insulating layer at the time of sintering and has a thermal expansion coefficient value between that of the solid electrolyte plate and that of the insulating layer, over an electrode formed on a solid electrolyte plate so that the insulating layer forms a gas chamber over the electrode;

placing on the intermediate layer a green sheet of said insulating layer containing $Al_2O_3$ as a major component, said insulating layer including a heater therein and having a gas introducing hole leading to the gas chamber;

pressing the green solid electrolyte plates, the green intermediate layer, and the green insulating layer; and sintering the resulting pressed product.

6. A process according to Claim 5, which further comprises ceramic spraying magnesium spinel on the electrode exposed to an outside atmosphere to form a protective film thereon.

**Patentansprüche**

1. Festes sauerstoff-Sensorelement vom Elektrolyttyp, aufweisend poröse Elektroden (5, 6, 7) und feste Elektrolytplatten (3, 4), die $ZrO_2$ als Hauptkomponente enthalten, die alternierend eingebracht sind; eine isolierende Schicht (8a, 8b) auf der Seite einer porösen Elektrode (7), die dem zu messenden Gas ausgesetzt ist; eine Zwischenshicht (12) zwischen der isolierenden Schicht (8a; 8b) und der festen Elektrolytplatte (4), auf der die eine poröse Elektrode (7) positioniert ist; wobei die isolierende Schicht (8a, 8b) ein engebautes Erwärmungselement (1A) und ein Loch (9a) zur Gaseinfuhr hat, das zu einer Gaskammer (10) führt, die sich über die ein poröse Elektrode (7) erstreckt; wobei die isolierende Schicht (8a, 8b) $Al_2O_3$ als Hauptkomponente enthält; wobei die Zwischenschicht (12) aus einer Metalloxidmischung hergestellt ist, die mit der isolierenden Schicht (8a, 8b) und der festen Elektrolytplatte (4) zur Zeit des Sinterns reagiert; und wobei die Zwischenschicht (12) einen Wert des thermischen Ausdehnungskoeffizienten hat, der zwischen dem der Elektrolytplatte (4) und dem der isolierenden Schicht (8a, 8b) liegt.

2. Festes Sauerstoff-Sensorelement vom Elektrolyttyp gemäß Anspruch 1, wobei die Metalloxidmischung teilweise stabilisiertes $ZrO_2$ und 1.5 bis 4 Gewichtsprozent $Al_2O_3$ ist.

3. Festes Sauerstoff-Sensorelement vom Elektrolyttyp nach Anspruch 1, welches weiterhin aufweist eine Schutzschicht, die auf einer Elektrode ausgebildet ist, die einer äußeren Umgebung ausgesetzt ist.

4. Festes Sauerstoff-Sensorelement vom Elektrolyttyp nach Anspruch 1, wobei die Zwischenschicht (12) aus $ZrO_2$ hergestellt ist, welches teilweise mit 6 Molprozent aus $Y_2O_3$ stabilisiert ist, wobei die Zwischenschicht (12) zwischen einer isolierenden Schicht mit einem eingebauten Erwärmungselement und hergestellt aus Aluminium und einer festen Elektrolytschicht liegt, die aus $ZrO_2$ hergestellt ist, welches teilweise mit 6 Molprozent aus $Y_2O_3$ stabilisiert ist.

5. Verfahren zum Erzeugen des festen Sauerstoff-Sensorelementes vom Elektrolyttyp nach Anspruch 1, aufweisend

das Aufbauen einer ungesinterten Laminatlage durch alternierendes Plazieren von porösen Elektroden und festen Elektrolytplatten, wobei die festen Elektrolytplatten als Hauptkomponenten $ZrO_2$ enthalten, und das Ausformen der Elektroden auf den Elektrolytplatten,

das Plazieren einer ungesinterten Lage einer Zwischenschicht, die aus einer Metalloxidmischung hergestellt ist, die mit der festen Elektrolytplatte und einer isolierenden Schicht zur Zeit des Sinterns reagiert und einen thermischen Ausdehnungskoeffizienten hat, der zwischen dem der festen Elektrolytplatte und dem der isolierenden Schicht liegt, und zwar über eine auf einer festen Elektrolytplatte ausgebildeten Elektrode, so daß die isolierende Schicht eine Gaskammer über der Elektrode ausbildet;

das Plazieren auf der Zwischenschicht einer ungesinterten Lage der isolierenden Schicht, die $Al_2O_3$ als Hauptkomponente enthält, wobei die isolierende Schicht ein Erwärmungselement darin enthält und ein Loch zum Gaseinführen hat, welches in die Gaskammer führt;

das Pressen der ungesinterten, festen Elektrolytplatten, der ungesinterten Zwischenschicht und der ungesinterten, isolierenden Schicht; und

das Sintern des sich ergebenen, gepreßten Erzeugnisses.

6. Verfahren nach Anspruch 5, welches weiterhin aufweist das Keramiksprühen von Magnesiumspinell auf die Elektrode, die der äußeren Umgebung ausgesetzt ist, um einen Schutzfilm darauf auszubilden.

**Revendications**

1. Elément détecteur d'oxygène de type à électrolyte solide comprenant des électrodes poreuses (5, 6, 7) et des plaques d'électrolyte solide (3, 4) contenant du $ZrO_2$ comme composant principal, disposées en alternance; une couche isolante (8a, 8b) du côté d'une première électrode poreuse (7) qui est exposé au gaz à mesurer; une couche intermédiaire (12) entre la couche isolante (8a, 8b) et la plaque d'électrolyte solide (4) sur laquelle ladite première électrode poreuse (7) est placée; ladite couche isolante (8a, 8b) ayant un élément chauffant intégré (1A) et un trou d'introduction de gaz (9a) conduisant à une chambre à gaz (10) s'étendant sur ladite première électrode poreuse (7); ladite couche isolante (8a, 8b) contenant de l'$Al_2O_3$ comme composant principal; la couche intermédiaire (12) étant faite d'un mélange d'oxydes métalliques qui réagit avec la couche isolante (8a, 8b) et la plaque d'électrolyte solide (4) lors du frittage; et la couche intermédiaire (12) ayant un coefficient de dilatation thermique entre celui de la plaque d'électrolyte (4) et celui de la couche isolante (8a, 8b).

2. Elément détecteur d'oxygène de type à électrolyte solide selon la revendication 1, dans lequel le mélange d'oxydes métalliques est constitué de $ZrO_2$ partiellement stabilisé et 1,5 à 4% en poids d'$Al_2O_3$.

3. Elément détecteur d'oxygène de type à électrolyte solide selon la revendication 1, qui comprend de plus une couche protectrice formée sur une électrode exposée à une atmosphère extérieure.

4. Elément détecteur d'oxygène de type à électrolyte solide selon la revendication 1, dans lequel la couche intermédiaire (12) est faite de $ZrO_2$ partiellement stabilisé avec 6% molaires d'$Y_2O_3$, ladite couche intermédiaire (12) étant entre une couche isolante ayant un élément chauffant intégré et fait d'alumine et une couche d'électrolyte solide faite de $ZrO_2$ partiellement stabilisé avec 6% molaires d'$Y_2O_3$.

5. Procédé pour produire un élément détecteur d'oxygène de type à électrolyte solide selon la revendication 1, qui comprend la construction d'un stratifié de feuilles crues par mise en place d'électrodes poreuses et de plaques d'électrolyte solide alternées, lesdites plaques d'électrolyte solide contenant du $ZrO_2$ comme composant principal, et la formation des électrodes sur les plaques d'électrolyte;

la mise en place d'une feuille crue d'une couche intermédiaire faite d'un mélange d'oxydes métalliques qui réagit avec la plaque d'électrolyte solide et une couche isolante lors du frittage et a un coefficient de dilation thermique entre celui de la plaque d'électrolyte solide et celui de la couche isolante, sur une électrode formée sur une plaque d'électrolyte solide de façon à ce que la couche isolante forme une chambre à gaz sur l'électrode;

la mise en place sur la couche intermédiaire d'une feuille crue de ladite couche isolante contenant de l'$Al_2O_3$ comme composant principal, ladite couche isolante comprenant un élément chauffant et ayant un trou d'introduction de gaz conduisant à la chambre de gaz;

la compression des plaques d'électrolyte solide crues, de la couche intermédiaire crue et de la couche isolante crue; et

le frittage du produit comprimé obtenu.

6. Procédé selon la revendication 5, qui comprend de plus la pulvérisation d'une céramique de type spinelle de magnésium sur l'électrode exposée à une atmosphère extérieure pour y former une pellicule protectrice.

FIG. 1

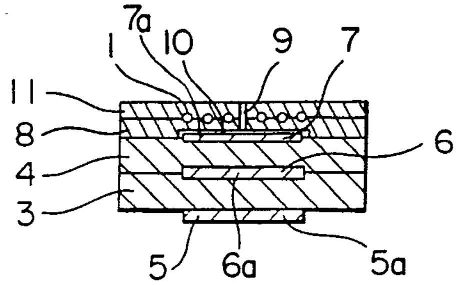


FIG. 2

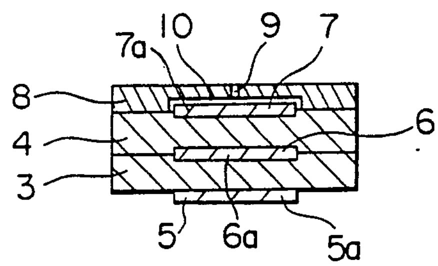


FIG. 3

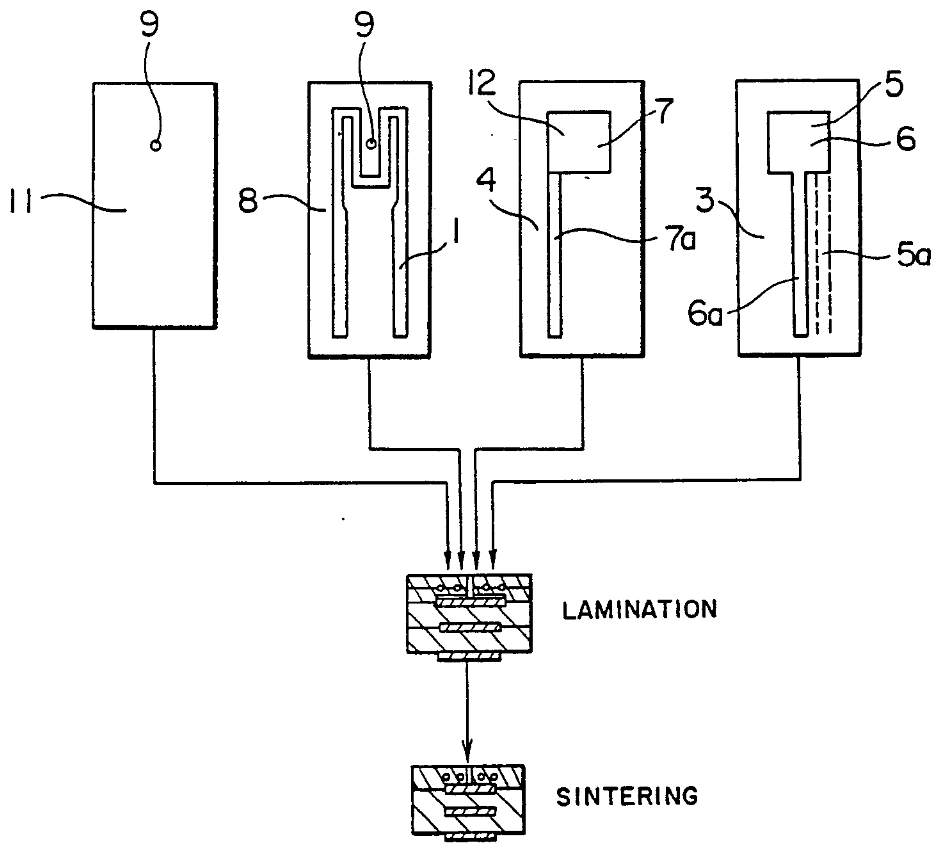

FIG. 4

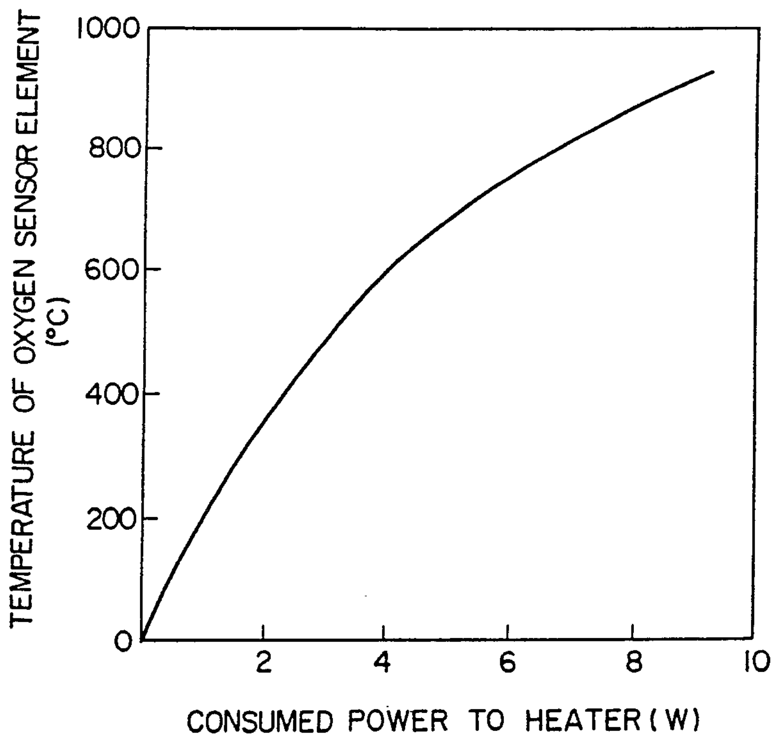
TEMPERATURE OF OXYGEN SENSOR ELEMENT (°C)
1000
800
600
400
200
0
2
4
6
8
10
CONSUMED POWER TO HEATER (W)

FIG. 5

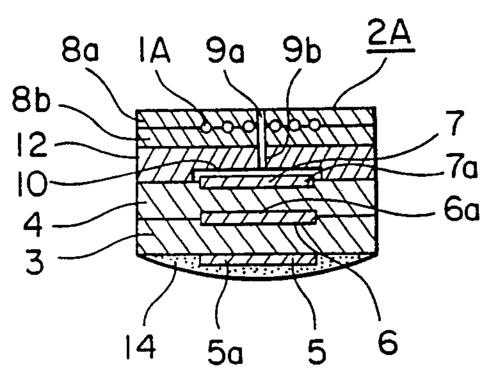
8a
1A
9a
9b
2A
8b
12
10
4
3
7
7a
6a
14
5a
5
6

FIG. 6

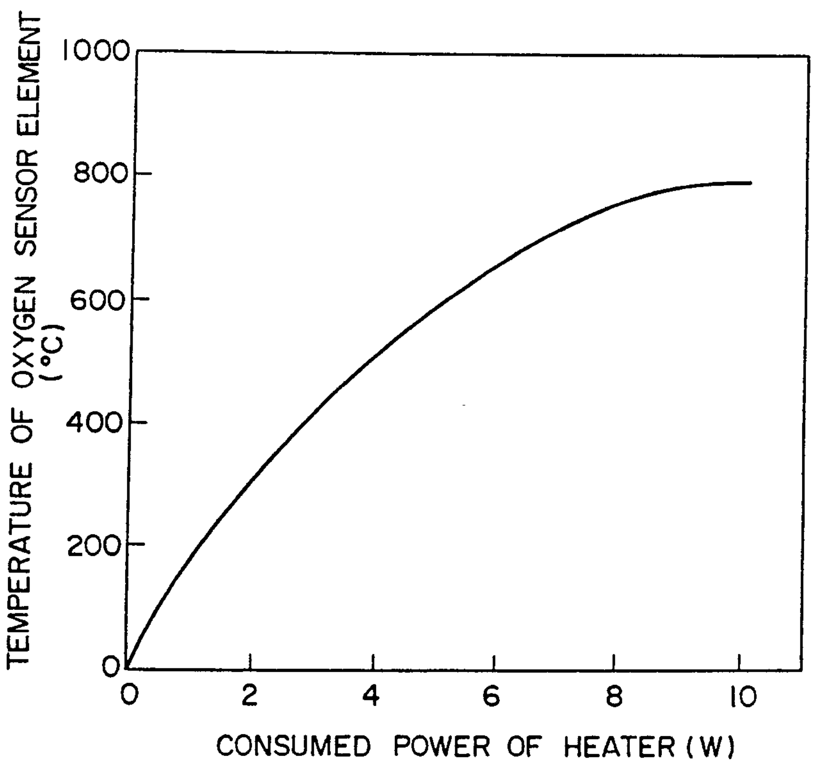
TEMPERATURE OF OXYGEN SENSOR ELEMENT (°C)
1000
800
600
400
200
0
0
2
4
6
8
10
CONSUMED POWER OF HEATER (W)

FIG. 7

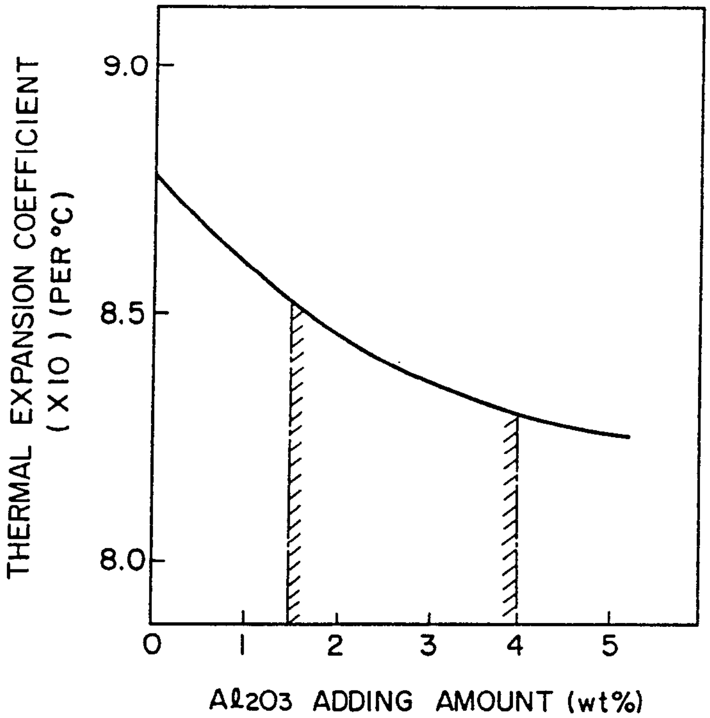
THERMAL EXPANSION COEFFICIENT
( X10 ) (PER °C)
9.0
8.5
8.0
0
1
2
3
4
5
Aℓ2O3 ADDING AMOUNT (wt%)

FIG. 8

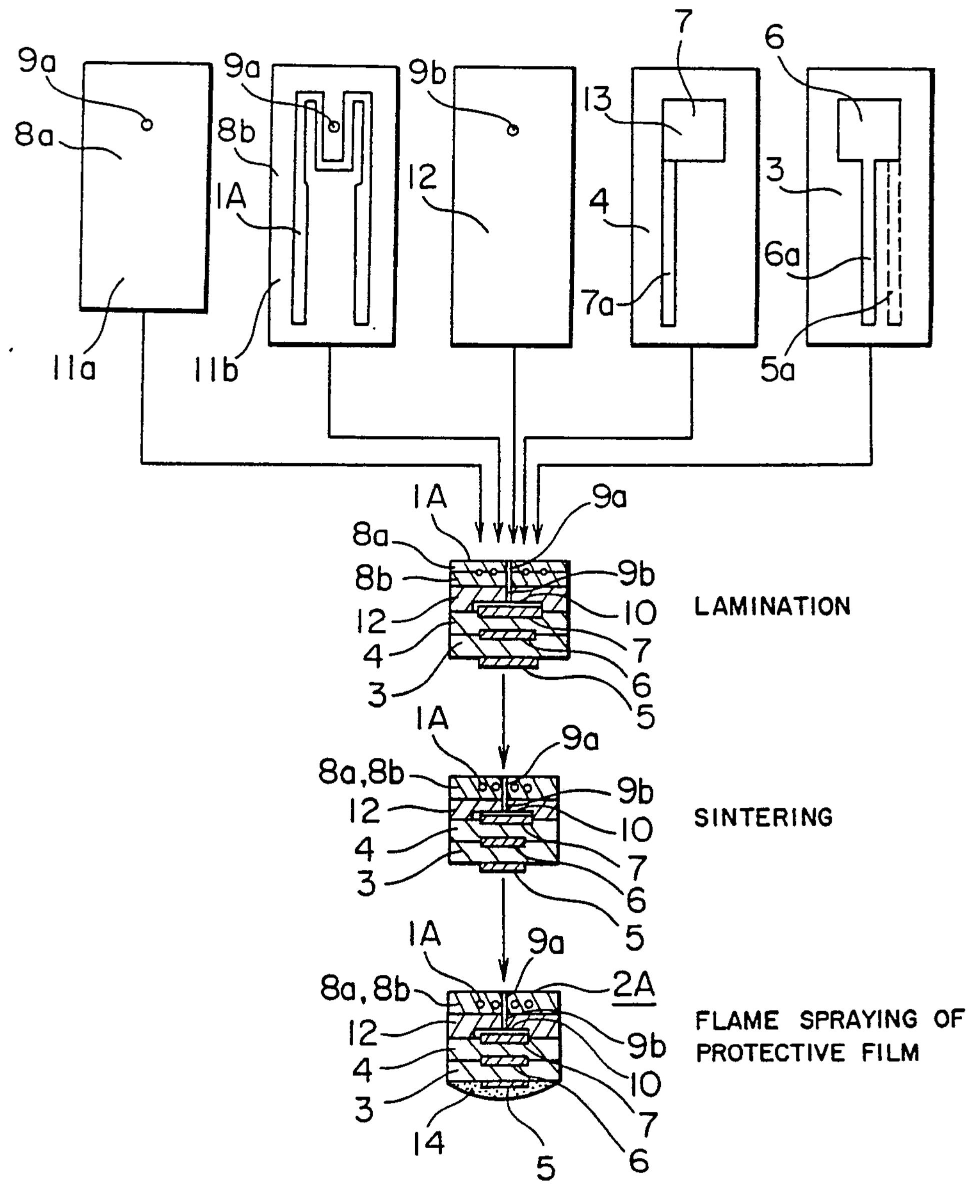
9a
8a
11a
9a
8b
1A
11b
9b
12
7
13
4
7a
6
3
6a
5a
1A
9a
8a
8b
12
4
3
9b
10
7
6
5
LAMINATION
1A
9a
8a,8b
12
4
3
9b
10
7
6
5
SINTERING
1A
9a
8a, 8b
2A
12
4
3
14
9b
10
7
5
6
FLAME SPRAYING OF
PROTECTIVE FILM

FIG. 9

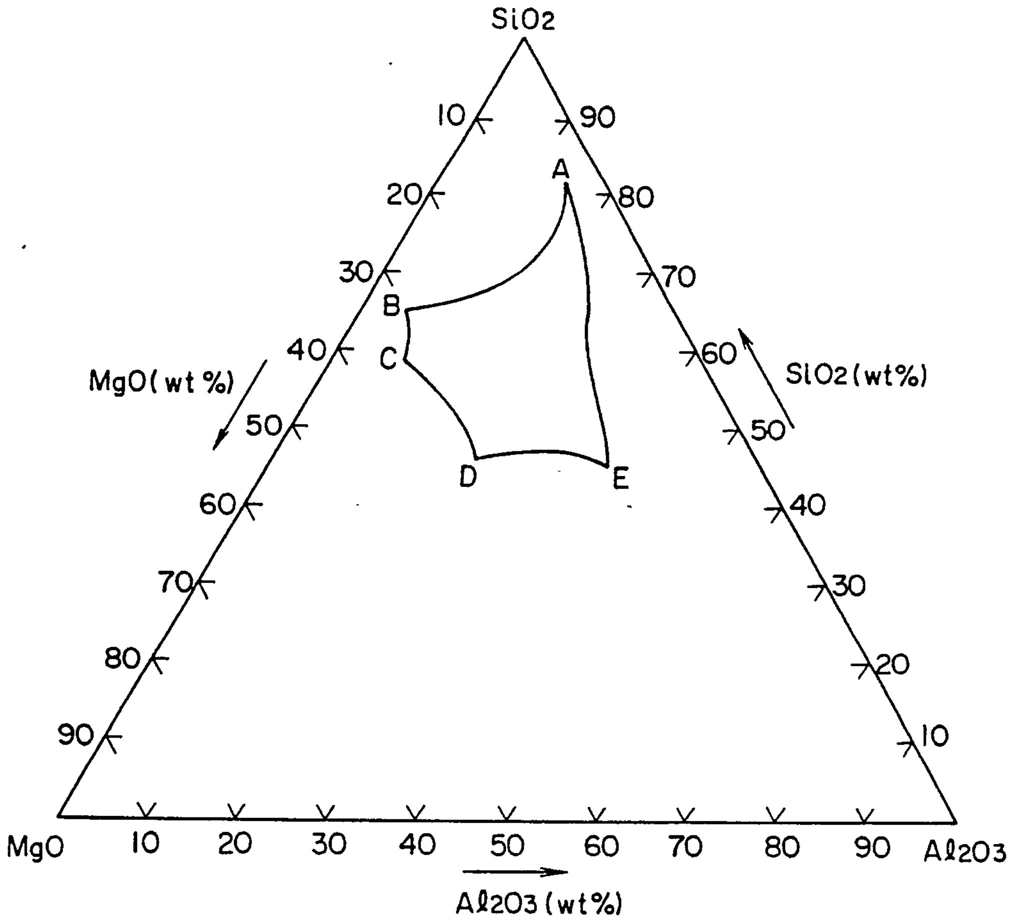
SiO2
10
20
30
40
50
60
70
80
90
A
B
C
D
E
MgO(wt %)
SiO2(wt%)
MgO
Al2O3
Al2O3(wt%)

FIG. 10

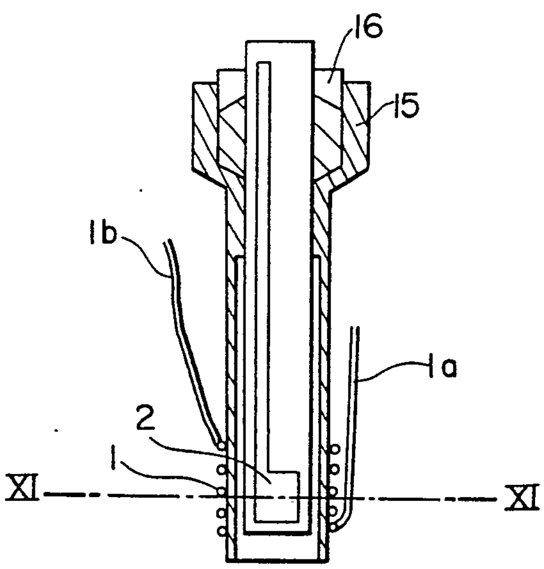


FIG. 11